# EUROPÄISCHE PATENTSCHRIFT

(11) **EP 3 614 809 B1**
(45) Veröffentlichungstag und Bekanntmachung des Hinweises auf die Patenterteilung: **20.04.2022**
(21) Anmeldenummer: 19183772.3
(22) Anmeldetag: 02.07.2019
(51) Int. Cl.: H05B 6/14, B23P 11/02

(54) **SCHRUMPFGERÄT MIT FUTTERERKENNUNG UND AUTOMATISCHER SPULENVERSTELLUNG**
SHRINKING APPARATUS WITH CHUCK DETECTION AND AUTOMATIC COIL ADJUSTMENT
APPAREIL DE FRETTAGE À RECONNAISSANCE DE COUCHE D'ANTIFRICTION ET RÉGLAGE AUTOMATIQUE DE LA BOBINE

(30) Priorität: 24.08.2018 DE 202018104875 U
(43) Veröffentlichungstag der Anmeldung: 26.02.2020
(73) Patentinhaber: Haimer GmbH, 86568 Hollenbach-Igenhausen (DE)
(72) Erfinder: Haimer, Andreas, 86568 Hollenbach-Igenhausen (DE)

(56) Entgegenhaltungen:
- EP-A1- 1 510 287
- EP-A1- 1 867 211
- EP-A2- 2 116 104
- DE-A1- 10 225 839
- DE-A1- 10 226 994
- DE-A1-102008 045 781
- DE-A1-102016 206 515
- DE-U1- 20 023 809

## Beschreibung

Die vorliegende Erfindung betrifft eine Induktionsspulen-Baueinheit zum Erwärmen eines eine Aufnahmeöffnung für einen Schaft eines Rotationswerkzeugs enthaltenden, frei endenden Hülsenabschnitts eines Werkzeughalters, der den in der Aufnahmeöffnung sitzenden Schaft des Werkzeugs im Presssitz hält und bei Erwärmung freigibt, umfassend eine Haltevorrichtung zum Halten des Werkzeughalters während eines Erwärmungsvorgangs, eine im Erwärmungsbetrieb den Hülsenabschnitt umschließende Spulenanordnung, und eine zumindest in der Nähe des freien Endes des Hülsenabschnitts des Werkzeughalters anordenbare Magnetfluss-Konzentratoranordnung aus weichmagnetischem, elektrisch im Wesentlichen nicht-leitendem Material auf der dem freien Ende des Hülsenabschnitts benachbarten Seite der Spulenanordnung.

Derartige gattungsgemäße Induktionsspulen-Baueinheiten sind aus dem Stand der Technik, beispielsweise aus der EP 1 867 211 A1 bekannt und werden dazu verwendet, Werkzeughalter mittels magnetischer Wechselfelder und der dadurch in den Werkzeughaltern induzierten Wirbelströme thermisch aufzuweiten, um in diesem aufgeweiteten Zustand das Werkzeug einsetzen zu können, das nach einem Abkühlungsvorgang des Werkzeughalters dann fest und symmetrisch von diesem gehalten wird. Für eine weitergehende Beschreibung der technischen und betriebsmäßigen Hintergründe sei daher auf die genannte Patentanmeldung verwiesen.

DE 200 23 809 U1 (KELCH & LINKS GMBH [DE]) 1. Juni 2006 (2006-06-01) beschreibt eine Induktionsspulen-Baueinheit zum Erwärmen eines eine Aufnahmeöffnung für einen Schaft eines Rotationswerkzeugs enthaltenden, frei endenden Hülsenabschnitts eines Werkzeughalters, der den in der Aufnahmeöffnung sitzenden Schaft des Werkzeugs im Presssitz hält und bei Erwärmung freigibt.

Bei derartigen gattungsgemäßen Baueinheiten stellt sich jedoch das Problem, dass für einen effizienten Betrieb die Induktionsspulen-Baueinheit hinsichtlich verschiedener Betriebsparameter jeweils individuell auf den gerade darin gehaltenen Werkzeughalter einzustellen ist, was einen hohen Grad von manuellem Eingriff erfordert und somit die Taktzeiten zum Tauschen eines Werkzeugs in verschiedenen Typen von Werkzeughaltern unter Umständen deutlich verlängert. Wird andererseits eine derartige Einstellung auf den momentan gehaltenen Werkzeughalter nicht oder fehlerhaft vorgenommen, kann unter Umständen der Betrieb der Spuleneinheit ineffizient sein, da die vorgesehenen Wirbelströme nicht geeignet in dem Werkzeughalter induziert werden. In besonders ungünstigen Fällen kann es sogar zu einer Überhitzung und damit Zerstörung des Werkzeughalters kommen.

Es ist somit die Aufgabe der vorliegenden Erfindung, eine gattungsgemäße Induktionsspulen-Baueinheit derart weiterzubilden, dass die eben genannten Nachteile von aus dem Stand der Technik bekannten derartigen Baueinheiten behoben werden, wobei die erfindungsgemäße Induktionsspulen-Baueinheit insbesondere einen erhöhten Automatisierungsgrad aufweisen und somit bei hoher Betriebssicherheit mit kürzeren Taktzeiten betrieben werden kann.

Hierzu umfasst die erfindungsgemäße Induktionsspulen-Baueinheit wenigstens eine Erfassungseinrichtung zur automatischen Erkennung wenigstens einer Eigenschaft des von der Haltevorrichtung gehaltenen Werkzeughalters, wenigstens eine Aktuatoreinrichtung zur Anpassung wenigstens eines Betriebsparameters des Erwärmungsbetriebs und eine Steuereinheit, welche mit der wenigstens einen Erfassungseinrichtung zum Erhalten von den Werkzeughalter betreffenden Daten sowie mit der wenigstens Aktuatoreinrichtung zum Anweisen einer Anpassung des wenigstens einen Betriebsparameters jeweils in Datenkommunikation steht, wobei die Steuereinheit dazu eingerichtet ist, eine Anpassung des wenigstens einen Betriebsparameters auf Grundlage der erkannten wenigstens einen Eigenschaft des Werkzeughalters anzuweisen.

Indem auf diese Weise eine automatische Anpassung des Betriebs der erfindungsgemäßen Baueinheit auf die erfasste wenigstens eine Eigenschaft des Werkzeughalters vorgenommen wird, werden manuelle Eingriffe zur Einstellung hiervon überflüssig gemacht, so dass einerseits die hierfür bisher benötigte Zeit eingespart wird und andererseits durch das automatische Vornehmen des Anpassungsprozesses auch hohe Standards hinsichtlich Betriebssicherheit und Toleranzen eingehalten werden können, um einen vorschriftsmäßigen Betrieb der Baueinheit sicherstellen zu können.

Hierbei sind verschiedene Betriebsparameter der erfindungsgemäßen Induktionsspulen-Baueinheit denkbar, die durch die Aktuatoreinrichtung angepasst werden können. Beispielsweise kann eine Positionierung der Spulenanordnung im Erwärmungsbetrieb angepasst werden, insbesondere entlang der axialen Richtung des Werkzeughalters. Diese relativ einfache Ausführungsform beruht darauf, dass die Spulenanordnung in einem Freigabezustand eines von der Baueinheit gehaltenen Werkzeughalters ohnehin von diesem axial weggeführt wird, um einen Zugriff und ein Austauschen des Werkzeughalters zu ermöglichen.

Erst bei einer Überführung der Spulenanordnung in einen Arbeitszustand, in dem sie den Werkzeughalter radial umgibt, wird sie zur Erhitzung des Werkzeughalters bestromt. Diese Überführung der Spulenanordnung kann erfindungsgemäß durch die Aktuatoreinrichtung gesteuert bzw. geregelt werden, so dass nach Erfassung der wenigstens einen Eigenschaft des Werkzeughalters die Spulenanordnung in eine auf diesen Werkzeughalter abgestimmte optimale Position in ihren Arbeitszustand verfahren werden kann. Hierbei kann die wenigstens eine Eigenschaft des Werkzeughalters beispielsweise dessen axiale Abmessungen betreffen. Ebenso können aber auch geometrische und/oder magnetische Eigenschaften der Spulenanordnung angepasst werden.

Hierzu kann die Aktuatoreinrichtung insbesondere bewegbare Anschlagmittel für die Spulenanordnung umfassen. Auf diese Weise findet die oben beschriebene übliche Verlagerung der Spulenanordnung in axialer Richtung in gewohnter Weise statt, wobei sie schließlich bei einer geeigneten axialen Position durch ihren Anschlag gegen die Anschlagmittel endet. Selbstverständlich sind hierbei die Verlagerungsmittel der Spulenanordnung derart vorzusehen, dass durch den Anschlag keine Beschädigung an der Spulenanordnung oder anderen Komponenten der erfindungsgemäßen Baueinheit auftreten können.

Alternativ oder zusätzlich kann die Aktuatoreinrichtung dazu eingerichtet sein, die Positionierung der Magnetfluss-Konzentratoranordnung in axialer und/oder radialer Richtung des Werkzeughalters im Erwärmungsbetrieb anzupassen. Auf diese Weise kann abhängig von beispielsweise den geometrischen Abmessungen des Werkzeughalters eine optimale Anordnung der Magnetfluss-Konzentratoranordnung bezüglich dem Außenumfang des Werkzeughalters auf Grundlage der erfassten wenigstens einen Eigenschaft vorgenommen werden, die in diesem Fall dementsprechend beispielsweise die Außenmaße des Werkzeughalters betreffen kann.

Weiterhin kann die erfindungsgemäße Baueinheit wenigstens eine Absaugeinrichtung für bei der Erwärmung entstehende Dämpfe und/oder ein Abdichtelement für Kühlmedien umfassen, wobei die Aktuatoreinrichtung dazu eingerichtet sein kann, die Positionierung der wenigstens einen Absaugeinrichtung und/oder des wenigstens einen Abdichtmittels für Kühlmedien in axialer und/oder radialer Richtung des Werkzeughalter im Erwärmungsbetrieb anzupassen. Auch in diesem Zusammenhang kann dementsprechend die von der Erfassungseinrichtung erfasste wenigstens eine Eigenschaft des Werkzeughalters dessen Außenmaße betreffen.

Die Spulenanordnung ist mit einer verstellbaren Geometrie bereitgestellt, wobei die Aktuatoreinrichtung ferner dazu eingerichtet ist, die Geometrie der Spulenanordnung zu verstellen, insbesondere ihren Durchmesser und/oder den axialen Abstand von verschiedenen Wicklungsbereichen zueinander.

Im Fall, dass die Spulenanordnung mit schaltbaren oder umpolbaren Wicklungsbereichen bereitgestellt ist, kann die Aktuatoreinrichtung ferner dazu eingerichtet sein, Wicklungsbereiche der Spulenanordnung zu- oder abzuschalten und/oder umzupolen. Es versteht sich hierbei, dass im Fall der schaltbaren und/oder umpolbaren Wicklungsbereiche die Aktuatoreinrichtung keine mechanische Aktuatoreinrichtung im strengen Sinn ist, sondern dass sie vielmehr Elemente der elektrischen Versorgungseinheit für die Spulenanordnung aktuiert, beispielsweise elektronische Steuerschalter oder ähnliches.

Zuletzt kann der Aktuator der erfindungsgemäßen Baueinheit auch dazu eingerichtet sein, Parameter der elektrischen Versorgung der Spulenanordnung anzupassen, insbesondere die angelegte Wechselspannung und/oder deren Frequenz und/oder deren Einwirkdauer. Auf diese Weise kann beispielsweise berücksichtigt werden, dass die Wanddicke von verschiedenen Typen von Werkzeughaltern bei gleichen äußeren Abmessungen unterschiedlich sein kann und demzufolge verschieden starke induzierte Wirbelströme in diesen notwendig sein können, um die notwendige Aufweitung davon zu erreichen. Auch in dieser Ausführungsform handelt es sich bei der Aktuatoreinrichtung nicht um einen mechanischen Aktuator im strengen Sinne, sondern beispielsweise um eine elektronische Schaltung, die Einfluss auf die Stromversorgungseinheit der Induktionsspule nehmen kann.

Wie bereits angedeutet, kann die Erfassungseinrichtung dazu eingerichtet sein, verschiedene Eigenschaften des von der Haltevorrichtung gehaltenen Werkzeughalters zu bestimmen, beispielsweise dessen Außenabmessungen, Wandstärke oder axiale Erstreckung. Hierzu kann die Erfassungseinrichtung die wenigstens eine Eigenschaft optisch anhand der Form des Werkzeughalters, anhand seines Gewichts, seiner magnetischen Eigenschaften, einer haptischen Abtastung und/oder einer Ultraschallbildgebung bestimmen. Es versteht sich, dass die Erfassungseinrichtung hierzu mit geeigneten Sensoren und gegebenenfalls geeigneten Transmittern ausgestattet sein muss, beispielsweise optischen Kameras mit einer nachgeschalteten Bildanalyse, Gewichtssensoren, Induktionssensoren zum Erfassen der magnetischen Eigenschaften, Berührungssensoren und/oder einer Ultraschallquelle und einem damit zusammenwirkenden Ultraschallempfänger.

Andererseits könnte die Erfassungseinrichtung jedoch auch dazu vorgesehen sein, eine oder mehrere an einem Werkzeughalter vorgesehene Kodierungen zu erfassen, insbesondere eine optische Kodierung, eine Beschriftung, einen RFID-Chip und/oder eine mechanische Markierung.

Die Erfassung einer derartigen Markierung ist insbesondere dann von Vorteil, wenn hieraus direkt der Typ des momentan gehaltenen Werkzeughalters bestimmt werden kann, dessen Eigenschaften dann der Steuereinheit bekannt sein müssen. Dieser kann zu diesem Zweck eine Speichereinheit zugeordnet sein, in welcher dementsprechende Daten hinterlegt sein können, welche es der Steuereinheit erlauben, auf Grundlage der von der Erfassungseinrichtung erhaltenen Daten den Typ des von der Haltevorrichtung gehaltenen Werkzeughalters zu bestimmen und auf dieser Grundlage dann entsprechende Anweisungen an die Aktuatoreinrichtung weiterzugeben.

Somit besteht erfindungsgemäß entweder die Möglichkeit, durch die Erfassungseinrichtung direkt die relevanten Eigenschaften des Werkzeughalters zu bestimmen und an die Steuereinrichtung weiterzugeben oder von der Steuereinrichtung auf Grundlage der von der Erfassungseinrichtung erfassten wenigstens einen Eigenschaft einen Typ des gehaltenen Werkzeughalters bestimmen zu lassen und jeweils dann auf Grundlage dieser Daten entweder parametrisch eine von der Aktuatoreinrichtung vorzunehmende Anpassung vornehmen zu lassen oder eine auf den erfassten Typ von Werkzeughalter abgestimmte Anpassung.

Es versteht sich hierbei, dass alle genannten Möglichkeiten jeweils einzeln oder in beliebigen Kombinationen zur Anwendung kommen können.

## Patentansprüche

1. Induktionsspulen-Baueinheit zum Erwärmen eines eine Aufnahmeöffnung für einen Schaft eines Rotationswerkzeugs enthaltenden, frei endenden Hülsenabschnitts eines Werkzeughalters, der den in der Aufnahmeöffnung sitzenden Schaft des Werkzeugs im Presssitz hält und bei Erwärmung freigibt, umfassend:
- eine Haltevorrichtung zum Halten des Werkzeughalters während eines Erwärmungsvorgangs;
- eine im Erwärmungsbetrieb den Hülsenabschnitt umschließende Spulenanordnung; und
- eine zumindest in der Nähe des freien Endes des Hülsenabschnitts des Werkzeughalters anordenbare Magnetfluss-Konzentratoranordnung aus weichmagnetischem, elektrisch im Wesentlichen nicht-leitendem Material auf der dem freien Ende des Hülsenabschnitts benachbarten Seite der Spulenanordnung;
- wenigstens eine Erfassungseinrichtung zur automatischen Erkennung wenigstens einer Eigenschaft des von der Haltevorrichtung gehaltenen Werkzeughalters;
- wenigstens eine Aktuatoreinrichtung zur Anpassung wenigstens eines Betriebsparameters des Erwärmungsbetriebs; und
- eine Steuereinheit, welche mit der wenigstens einen Erfassungseinrichtung zum Erhalten von den Werkzeughalter betreffenden Daten sowie mit der wenigstens einen Aktuatoreinrichtung zum Anweisen einer Anpassung des wenigstens einen Betriebsparameters jeweils in Datenkommunikation steht, wobei die Steuereinheit dazu eingerichtet ist, eine Anpassung des wenigstens einen Betriebsparameters auf Grundlage der erkannten wenigstens einen Eigenschaft des Werkzeughalters anzuweisen,
**dadurch gekennzeichnet, dass**
die Spulenanordnung eine verstellbare Geometrie aufweist, wobei die Aktuatoreinrichtung dazu eingerichtet ist, die Geometrie der Spulenanordnung zu verstellen.

2. Baueinheit nach Anspruch 1 , **dadurch gekennzeichnet, dass** die Aktuatoreinrichtung dazu eingerichtet ist, die Positionierung der Spulenanordnung im Erwärmungsbetrieb anzupassen, insbesondere entlang der axialen Richtung des Werkzeughalters.

3. Baueinheit nach Anspruch 2 , **dadurch gekennzeichnet, dass** die Aktuatoreinrichtung bewegbare Anschlagmittel für die Spulenanordnung umfasst.

4. Baueinheit nach einem der vorhergehenden Ansprüche, **dadurch gekennzeichnet, dass** die Aktuatoreinrichtung dazu eingerichtet ist, die Positionierung der Magnetfluss-Konzentratoranordnung in axialer und/oder radialer Richtung des Werkzeughalters im Erwärmungsbetrieb anzupassen.

5. Baueinheit nach einem der vorhergehenden Ansprüche, **dadurch gekennzeichnet, dass** sie ferner wenigstens eine Absaugeinrichtung für austretende Dämpfe und/oder wenigstens ein Abdichtmittel für Kühlmedien umfasst, wobei die Aktuatoreinrichtung dazu eingerichtet ist, die Positionierung der wenigstens einen Absaugeinrichtung und/oder des wenigstens einen Abdichtmittels für Kühlmedien in axialer und/oder radialer Richtung des Werkzeughalters im Erwärmungsbetrieb anzupassen.

6. Baueinheit nach einem der vorhergehenden Ansprüche, **dadurch gekennzeichnet, dass** die Spulenanordnung schaltbare und/oder umpolbare Wicklungsbereiche aufweist, wobei die Aktuatoreinrichtung dazu eingerichtet ist, die Wicklungsbereiche der Spulenanordnung zu- oder abzuschalten und/oder umzupolen, und/oder dass die Aktuatoreinrichtung dazu eingerichtet ist, einen Durchmesser der Spulenanordnung und/oder einen axialen Abstand von schaltbaren und/oder umpolbaren Wicklungsbereichen der Spulenanordnung zueinander zu verstellen.

7. Baueinheit nach einem der vorhergehenden Ansprüche, **dadurch gekennzeichnet, dass** der Aktuator dazu eingerichtet ist, Parameter der elektrischen Versorgung der Spulenanordnung anzupassen, insbesondere die angelegte Wechselspannung und/oder deren Frequenz.

8. Baueinheit nach einem der vorhergehenden Ansprüche, **dadurch gekennzeichnet, dass** die Erfassungseinrichtung dazu eingerichtet ist, die wenigstens eine Eigenschaft des von der Haltevorrichtung gehaltenen Werkzeughalter optisch anhand seiner Form, anhand seines Gewichts, seiner magnetischen Eigenschaften, einer haptischen Abtastung und/oder einer Ultraschall-Bildgebung zu bestimmen.

9. Baueinheit nach einem der vorhergehenden Ansprüche, **dadurch gekennzeichnet, dass** die Erfassungseinrichtung dazu eingerichtet ist, eine an dem Werkzeughalter vorgesehene Codierung zu erfassen, insbesondere eine optische Codierung, eine Beschriftung, einen RFID-Chip und/oder eine mechanische Markierung.

10. Baueinheit nach einem der vorhergehenden Ansprüche, **dadurch gekennzeichnet, dass** der Steuereinheit ferner eine Speichereinheit zugeordnet ist, in welcher Daten hinterlegt sind, welche es der Steuereinheit erlauben, auf Grundlage der von der Erfassungseinrichtung erhaltenen Daten den Typ des von der Haltevorrichtung gehaltenen Werkzeughalters zu bestimmen.

## Claims

1. Induction coil assembly for heating a freely ending sleeve section of a tool holder containing a receiving opening for a shank of a rotary tool, which holds the shank of the tool seated in the receiving opening in a press fit and releases it when heated, comprising:
- a holding device for holding the tool holder during a heating operation;
- a coil arrangement enclosing the sleeve section during heating operation; and
- a magnetic flux concentrator arrangement which can be arranged at least in the vicinity of the free end of the sleeve section of the tool holder and is made of soft magnetic, essentially electrically non-conductive material on the side of the coil arrangement that is adjacent to the free end of the sleeve section;
- at least one detection device for the automatic detection of at least one property of the tool holder held by the holding device;
- at least one actuator device for adapting at least one operating parameter of the heating operation; and
- a control unit which is in respective data communication with the at least one detection device for receiving data relating to the tool holder and with the at least one actuator device for instructing an adaptation of the at least one operating parameter, wherein the control unit is set up to instruct adaptation of the at least one operating parameter on the basis of the detected at least one property of the tool holder, **characterized in that**
the coil arrangement has an adjustable geometry, wherein the actuator device is set up to adjust the geometry of the coil arrangement.

2. Assembly according to Claim 1, **characterized in that** the actuator device is set up to adapt the positioning of the coil arrangement during heating operation, in particular along the axial direction of the tool holder.

3. Assembly according to Claim 2, **characterized in that** the actuator device comprises movable stop means for the coil arrangement.

4. Assembly according to one of the preceding claims, **characterized in that** the actuator device is set up to adapt the positioning of the magnetic flux concentrator arrangement in the axial and/or radial direction of the tool holder during heating operation.

5. Assembly according to one of the preceding claims, **characterized in that** it also comprises at least one extraction device for emerging vapours and/or at least one sealing means for cooling media, wherein the actuator device is set up to adapt the positioning of the at least one extraction device and/or of the at least one sealing means for cooling media in the axial and/or radial direction of the tool holder during heating operation.

6. Assembly according to one of the preceding claims, **characterized in that** the coil arrangement comprises switchable and/or reversible winding regions, wherein the actuator device is set up to switch the winding regions of the coil arrangement on or off and/or to reverse their polarity, and/or **in that** the actuator device is set up to adjust a diameter of the coil arrangement and/or an axial spacing of switchable and/or reversible winding regions of the coil arrangement relative to one another.

7. Assembly according to one of the preceding claims, **characterized in that** the actuator is set up to adapt parameters of the electrical supply of the coil arrangement, in particular the AC voltage applied and/or its frequency.

8. Assembly according to one of the preceding claims, **characterized in that** the detection device is set up to determine the at least one property of the tool holder held by the holding device optically by using its shape, by using its weight, its magnetic properties, by haptic scanning and/or by ultrasonic imaging.

9. Assembly according to one of the preceding claims, **characterized in that** the detection device is set up to detect a code provided on the tool holder, in particular an optical code, a label, an RFID chip and/or a mechanical marking.

10. Assembly according to one of the preceding claims, **characterized in that** the control unit is also assigned a memory unit, in which data is stored which allows the control unit to determine the type of tool holder held by the holding device on the basis of the data obtained by the detection device.

## Revendications

1. Unité modulaire à bobine d'induction destinée à réchauffer une portion de douille à extrémité libre d'un porte-outil contenant une ouverture d'accueil pour une queue d'un outil rotatif, qui maintient la queue de l'outil placée dans l'ouverture d'accueil en ajustement serré et la libère lors du réchauffement, comprenant :
- un dispositif de maintien destiné à maintenir le porte-outil pendant une opération de réchauffement ;
- un arrangement de bobines qui entoure la portion de douille en régime de réchauffement ; et
- un arrangement concentrateur de flux magnétique, pouvant être disposé au moins à proximité de l'extrémité libre de la portion de douille du porte-outil, en un matériau magnétique doux, sensiblement non conducteur d'électricité, sur le côté de l'arrangement de bobines voisin de l'extrémité libre de la portion de douille ;
- au moins un appareil d'acquisition destiné à la reconnaissance automatique d'au moins une caractéristique du porte-outil maintenu par le dispositif de maintien ;
- au moins un appareil actionneur destiné à adapter au moins un paramètre de fonctionnement du régime de réchauffement ; et
- une unité de commande, laquelle se trouve respectivement en communication de données avec l'au moins un appareil d'acquisition en vue d'obtenir des données concernant le porte-outil ainsi qu'avec l'au moins un appareil actionneur en vue d'ordonner une adaptation de l'au moins un paramètre de fonctionnement, l'unité de commande étant conçue pour ordonner une adaptation de l'au moins un paramètre de fonctionnement en s'appuyant sur l'au moins une caractéristique reconnue du porte-outil,
**caractérisée en ce que**
l'arrangement de bobines présente une géométrie variable, l'appareil actionneur étant conçu pour faire varier la géométrie de l'arrangement de bobines.

2. Unité modulaire selon la revendication 1, **caractérisée en ce que** l'appareil actionneur est conçu pour adapter le positionnement de l'arrangement de bobines en régime de réchauffement, notamment le long de la direction axiale du porte-outil.

3. Unité modulaire selon la revendication 2, **caractérisée en ce que** l'appareil actionneur comporte un moyen de butée mobile pour l'arrangement de bobines.

4. Unité modulaire selon l'une des revendications précédentes, **caractérisée en ce que** l'appareil actionneur est conçu pour adapter le positionnement de l'arrangement concentrateur de flux magnétique dans la direction axiale et/ou radiale du porte-outil en régime de réchauffement.

5. Unité modulaire selon l'une des revendications précédentes, **caractérisée en ce qu'**elle comporte en plus au moins un appareil d'aspiration pour les vapeurs produites et/ou au moins un moyen d'étanchéité pour des fluides de refroidissement, l'appareil actionneur étant conçu pour adapter le positionnement de l'au moins un appareil d'aspiration et/ou de l'au moins un moyen d'étanchéité pour des fluides de refroidissement dans la direction axiale et/ou radiale du porte-outil en régime de réchauffement.

6. Unité modulaire selon l'une des revendications précédentes, **caractérisée en ce que** l'arrangement de bobines possède des zones d'enroulement commutables et/ou à polarité réversible, l'appareil actionneur étant conçu pour mettre en ou hors circuit les zones d'enroulement de l'arrangement de bobines et/ou pour inverser leur polarité, et/ou **en ce que** l'appareil actionneur est conçu pour positionner l'un par rapport à l'autre un diamètre de l'arrangement de bobines et/ou un écart axial des zones d'enroulement commutables et/ou à polarité réversible de l'arrangement de bobines.

7. Unité modulaire selon l'une des revendications précédentes, **caractérisée en ce que** l'actionneur est conçu pour adapter les paramètres de l'alimentation électrique de l'arrangement de bobines, notamment la tension alternative appliquée et/ou sa fréquence.

8. Unité modulaire selon l'une des revendications précédentes, **caractérisée en ce que** l'appareil d'acquisition est conçu pour déterminer l'au moins une caractéristique du porte-outil maintenu par le dispositif de maintien optiquement à l'aide de sa forme, à l'aide de son poids, de ses caractéristiques magnétiques, d'un palpage haptique et/ou d'une imagerie ultrasonique.

9. Unité modulaire selon l'une des revendications précédentes, **caractérisée en ce que** l'appareil d'acquisition est conçu pour acquérir un codage prévu sur le porte-outil, notamment un codage optique, une inscription, une puce RFID et/ou un marquage mécanique.

10. Unité modulaire selon l'une des revendications précédentes, **caractérisée en ce qu'**une unité de mémoire est en outre associée à l'unité de commande, dans laquelle sont stockées des données qui permettent à l'unité de commande, en s'appuyant sur les données obtenues par l'appareil d'acquisition, de déterminer le type du porte-outil maintenu par le dispositif de maintien.
